# EUROPEAN PATENT APPLICATION

(11) **EP 4 852 397 A1**
(43) Date of publication of application: **09.12.2026**
(21) Application number: 25842869.7
(22) Date of filing: 20.05.2025
(51) Int. Cl.: H04L 47/6275

(54) **DATA TRANSMISSION CONTROLLER, DATA TRANSMISSION METHOD, ELECTRONIC DEVICE, AND COMPUTER STORAGE MEDIUM**

(30) Priority: 04.03.2025 CN 202510248544
(71) Applicant: Hygon Information Technology Co., Ltd., Tianjin 300392 (CN)
(72) Inventor: XU, Chao, Binhai New Area, Tianjin 300392 (CN); ZHOU, Peng, Binhai New Area, Tianjin 300392 (CN)
(74) Representative: Maiwald GmbH
(86) International application number: PCT/CN2025/096061
(87) International publication number: WO 2026/183963

(57) **Abstract**

A data transmission controller, a data transmission method, an electronic device, and a computer storage medium are provided. The data transmission controller includes N protocol layer controllers, an arbitrator, and a data link layer controller, where N is an integer greater than or equal to 2; the N protocol layer controllers are configured to transmit N pieces of protocol layer data; the arbitrator is configured to receive the N pieces of protocol layer data from the N protocol layer controllers, and determine a transmission priority of the N pieces of protocol layer data; and the data link layer controller is configured to transmit the N pieces of protocol layer data according to the transmission priority. The data transmission controller enables different protocol layers to share the same physical link resource, improving the utilization rate and flexibility of the link; furthermore, isolation and protection of different protocol layer data are realized.

## Description

### CROSS-REFERENCE TO RELATED APPLICATION

The present application claims the priority to Chinese Patent Application No. 202510248544.8, filed on March 4, 2025, the entire disclosure of which is incorporated herein by reference as portion of the present application.

### TECHNICAL FIELD

Embodiments of the present disclosure relate to a data transmission controller, a data transmission method, an electronic device, and a computer storage medium.

### BACKGROUND

With the rapid development of the Internet, more and more devices and systems need to perform interconnection communication, and different devices and systems often employ different protocol layers. Traditional interconnection communication methods need to allocate independent link resources to each protocol layer, resulting in serious waste of link resources. Furthermore, because each protocol layer requires independent hardware support, the system area and power consumption increase, bringing difficulties to system design and maintenance.

### SUMMARY

At least one embodiment of the present disclosure provides a data transmission controller including N protocol layer controllers, an arbitrator, and a data link layer controller, where the N protocol layer controllers are configured to transmit N pieces of protocol layer data; the arbitrator is configured to receive the N pieces of protocol layer data from the N protocol layer controllers, and determine a transmission priority of the N pieces of protocol layer data; and the data link layer controller is configured to transmit the N pieces of protocol layer data according to the transmission priority, where N is an integer greater than or equal to 2.

For example, in the data transmission controller provided by at least one embodiment of the present disclosure, the arbitrator includes: a transmitting module, configured to, after receiving the N pieces of protocol layer data from the N protocol layer controllers and determining the transmission priority of the N pieces of protocol layer data, transmit protocol layer data to be transmitted to the data link layer controller for data communication with a protocol layer at an opposite end; and a receiving module, configured to receive protocol layer data transmitted by the opposite end, and transmit the protocol layer data transmitted by the opposite end to own protocol layer of the receiving module for data communication with the protocol layer at the opposite end.

For example, in the data transmission controller provided by at least one embodiment of the present disclosure, the transmitting module includes: a data clock conversion module, configured to switch a first clock domain of the N pieces of protocol layer data to a second clock domain; and a control signal clock conversion module, configured to switch a first clock domain of a control signal corresponding to the N pieces of protocol layer data to a second clock domain, where the control signal is used to control a communication connection between each protocol layer and a corresponding protocol layer at the opposite end, and the second clock domain is the same as a clock domain of the data link layer controller.

For example, in the data transmission controller provided by at least one embodiment of the present disclosure, the transmitting module further includes: a data arbitration module, configured to determine the transmission priority of the N pieces of protocol layer data and select protocol layer data to be transmitted; and a data scheduling module, configured to receive the protocol layer data to be transmitted sent by the data arbitration module, and transmit the protocol layer data to be transmitted sent by the data arbitration module to the data link layer controller for transmitting to the opposite end.

For example, in the data transmission controller provided by at least one embodiment of the present disclosure, the transmitting module further includes a control instruction generation module, configured to receive a control signal converted by the control signal clock conversion module, package the control signal into a first control instruction, and transmit the first control instruction to the data scheduling module; and the data scheduling module is further configured to transmit the first control instruction to the data link layer controller for transmitting to the opposite end, to establish a communication connection with the corresponding protocol layer at the opposite end.

For example, in the data transmission controller provided by at least one embodiment of the present disclosure, the receiving module includes: a multi-channel data selection module, configured to receive the protocol layer data transmitted by the opposite end and a first control instruction transmitted by the opposite end; a data clock restoration module, configured to restore a second clock domain of the protocol layer data transmitted by the opposite end to the first clock domain; and a control signal clock restoration module, configured to restore a second clock domain of a control signal transmitted by the opposite end to the first clock domain, and transmit the control signal to the corresponding protocol layer.

For example, in the data transmission controller provided by at least one embodiment of the present disclosure, the receiving module further includes a control instruction parsing module configured to unpack the first control instruction into a control signal and transmit the control signal to the control signal clock restoration module; and the multi-channel data selection module is further configured to transmit the received protocol layer data transmitted by the opposite end to the data clock restoration module, and transmit the first control instruction to the control instruction parsing module, where a transmission priority of the first control instruction is higher than a transmission priority of the protocol layer data.

For example, in the data transmission controller provided by at least one embodiment of the present disclosure, the transmission priority of the first control instruction being higher than the transmission priority of the protocol layer data includes: in response to receiving a first control instruction transmitted by a protocol layer to be transmitted at the opposite end, transmitting data of the protocol layer to be transmitted.

For example, in the data transmission controller provided by at least one embodiment of the present disclosure, determining the transmission priority of the N pieces of protocol layer data and selecting the protocol layer data to be transmitted includes: in response to that when selecting n-th protocol layer data among the N pieces of protocol layer data, unselected (n+1)-th protocol layer data is not empty and lasts for a certain period of time, determining a transmission priority of the (n+1)-th protocol layer data being higher than a transmission priority of the n-th protocol layer data, and selecting the (n+1)th protocol layer data as the protocol layer data to be transmitted; or in response to selected n-th protocol layer data among the N pieces of protocol layer data being empty, and unselected (n+1)-th protocol layer data being full, determining the transmission priority of the (n+1)-th protocol layer data being higher than the transmission priority of the n-th protocol layer data, and selecting the (n+1)th protocol layer data as the protocol layer data to be transmitted, where n is an integer greater than 0 and less than or equal to N.

For example, in the data transmission controller provided by at least one embodiment of the present disclosure, the arbitrator further includes a virtual link state machine determination module configured to, in response to at least one of virtual link state machines that receive the N pieces of protocol layer data being in a working state, set a virtual link state machine of the data scheduling module to the working state in advance.

For example, in the data transmission controller provided by at least one embodiment of the present disclosure, the virtual link state machine includes any one of a silent state, a working state, and a low-power state.

At least one embodiment of the present disclosure further provides a data transmission method including: receiving data from N protocol layer controllers; determining, according to a transmission priority of the data from the N protocol layer controllers, data of a protocol layer controller to be transmitted; and packaging the data of the protocol layer controller to be transmitted, and transmitting the data of the protocol layer controller to be transmitted to an opposite end through a data transmission link, where N is an integer greater than or equal to 2.

For example, in the data transmission method provided by at least one embodiment of the present disclosure, after the receiving the data from the N protocol layer controllers, the data transmission method further includes converting a clock domain of the data from the N protocol layer controllers to a clock domain of a data transmission link controller for arbitration.

For example, the data transmission method provided by at least one embodiment of the present disclosure further includes: receiving a control signal corresponding to the data of the protocol layer controller to be transmitted, converting a clock domain of the control signal to a clock domain of the data transmission link, packaging the control signal into a control instruction, and transmitting the control instruction to the opposite end through the data transmission link to be in communication connection with a protocol layer controller of the opposite end, where a transmission priority of the control instruction is higher than a transmission priority of the data of the protocol layer controller to be transmitted.

For example, in the data transmission method provided by at least one embodiment of the present disclosure, the determining, according to the transmission priority of the data from the N protocol layer controllers, the data of the protocol layer to be transmitted includes: in response to that when selecting n-th protocol layer data among the N pieces of protocol layer data, unselected (n+1)-th protocol layer data is not empty and lasts for a certain period of time, determining a transmission priority of the (n+1)-th protocol layer data being higher than a transmission priority of the n-th protocol layer data, and selecting the (n+1)th protocol layer data as the protocol layer data to be transmitted; or in response to selected n-th protocol layer data among the N pieces of protocol layer data being empty, and unselected (n+1)-th protocol layer data being full, determining the transmission priority of the (n+1)-th protocol layer data being higher than the transmission priority of the n-th protocol layer data, and selecting the (n+1)th protocol layer data as the protocol layer data to be transmitted, where n is an integer greater than 0 and less than or equal to N.

For example, the data transmission method provided by at least one embodiment of the present disclosure further includes: in response to at least one of virtual link state machines that receive N pieces of protocol layer data being in a working state, setting a virtual link state machine connected to the data transmission link to the working state in advance.

For example, in the data transmission method provided by at least one embodiment of the present disclosure, the virtual link state machine includes any one of a silent state, a working state, and a low-power state.

At least one embodiment of the present disclosure further provides an electronic device including: a storage apparatus, configured to non-transitorily store computer-executable instructions; and a processing apparatus, configured to execute the computer-executable instructions, where the computer-executable instructions, when executed by the processing apparatus, execute the data transmission method provided by any embodiment of the present disclosure.

At least one embodiment of the present disclosure further provides a non-transitory storage medium non-transitorily storing computer-executable instructions, and the computer-executable instructions, when executed by a computer, execute the data transmission method provided by any embodiment of the present disclosure.

### BRIEF DESCRIPTION OF DRAWINGS

To more clearly illustrate the technical solutions of the embodiments of the present disclosure, the drawings of the embodiments will be briefly introduced below. It is apparent that the drawings described below pertain only to certain embodiments of the present disclosure and are not intended to limit the present disclosure.
Fig. 1 shows a schematic diagram of a usage scenario of data transmission in traditional interconnection communication;
Fig. 2A shows a schematic block diagram of a data transmission controller provided by at least one embodiment of the present disclosure;
Fig. 2B shows a schematic diagram of a usage scenario of a data transmission controller provided by at least one embodiment of the present disclosure;
Fig. 3A shows a structural block diagram of an arbitrator in a data transmission controller provided by at least one embodiment of the present disclosure;
Fig. 3B shows an example of an arbitrator in a data transmission controller provided by at least one embodiment of the present disclosure;
Fig. 4 shows a schematic diagram of arbitration logic of a data arbitration module in an arbitrator of a data transmission controller provided by at least one embodiment of the present disclosure;
Fig. 5 shows a schematic working diagram of a virtual link state machine of an arbitrator in a data transmission controller provided by at least one embodiment of the present disclosure;
Fig. 6 shows a schematic diagram of matching between virtual link state machines of respective ports of an arbitrator in a data transmission controller provided by at least one embodiment of the present disclosure;
Fig. 7 shows a schematic flowchart of a data transmission method provided by at least one embodiment of the present disclosure;
Fig. 8 is a schematic block diagram of an electronic device provided by at least one embodiment of the present disclosure; and
Fig. 9 shows a schematic diagram of a computer storage medium provided by at least one embodiment of the present disclosure.

### DETAILED DESCRIPTION

To make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. Also, the terms such as "a," "an," etc., are not intended to limit the amount, but indicate the existence of at least one. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

With the rapid development of the Internet, more and more devices and systems need to be in interconnection communication. A device usually has a plurality of communication protocols internally, such as control protocols and high-speed data communication protocols, and different protocols have different requirements for bandwidth and delay. Traditional interconnection communication methods need to allocate independent link resources to each protocol layer, resulting in serious waste of link resources. Furthermore, because each protocol layer requires independent hardware support, the system area and power consumption increase, bringing difficulties to system design and maintenance.

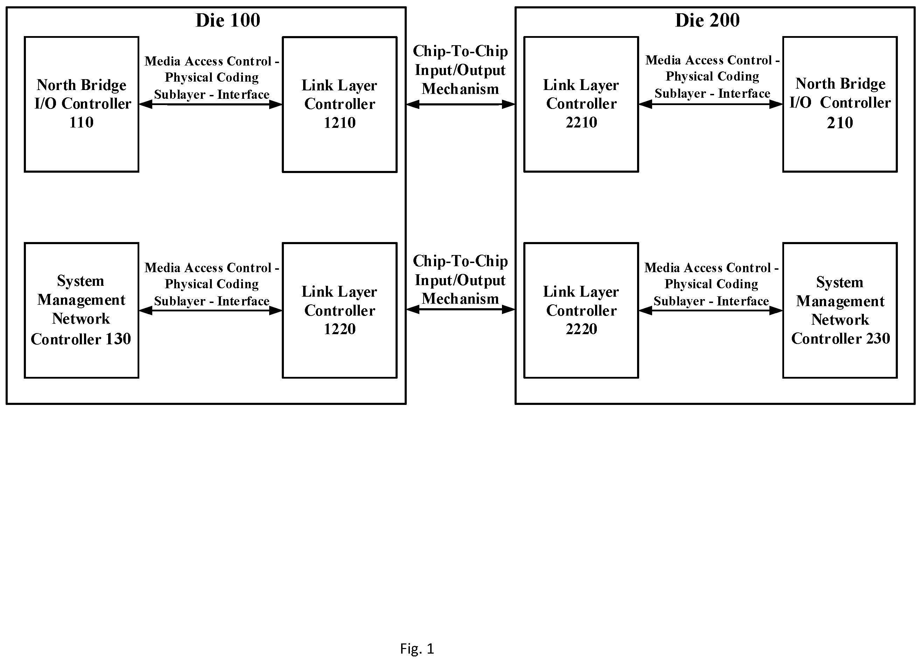

Fig. 1 shows a schematic diagram of a usage scenario of data transmission in traditional interconnection communication.

As shown in Fig. 1, the following description takes data transmission between Die 100 and Die 200 as an example. For example, each die includes two different types of protocol layer controllers as shown in Fig. 1, including a north bridge I/O (NBIO) controller and a system management network (SMN) controller, where the system management network controller refers to a control information transmission network controller in the embodiments of the present disclosure. Specifically, the Die 100 includes a north bridge I/O controller 110 and a control information transmission network controller 130; and Die 200 includes a north bridge I/O controller 210 and a control information transmission network controller 230. The north bridge I/O refers to a high-speed data transmission network managed by a northbridge die in a computer system. The northbridge die is a key component on the motherboard, mainly responsible for linking a processor (CPU), a memory (RAM), and a high-speed graphics interface (such as AGP or PCIe), and coordinating data transmission between them. The control information transmission network is a network for transmitting control information, used to transmit low-speed control information between different modules on a die. In addition, each die further includes two independent link layer controllers, and the link layer controllers serve a data link layer and a physical layer, and are intended to be responsible for data transmission between Die 100 and Die 200. Specifically, Die 100 includes link layer controllers 1210/1220, and Die 200 includes link layer controllers 2210/2220. For convenience of description below, the north bridge I/O controller is abbreviated as "NBIO controller", and the control information transmission network controller is abbreviated as "SMN controller".

As shown in Fig. 1, a NBIO controller and a SMN controller are respectively communicatively connected to corresponding link layer controllers, through a media access control-physical coding sublayer interface (MAC-PCS interface), where the MAC-PCS interface is a standardized interface in die data transmission, used to connect a media access control (MAC) layer and a physical coding sublayer (PCS), and both the MAC layer and the PCS layer are sublayers of the data link layer. Moreover, Die 100 and Die 200 are communicatively connected through a chip-to-chip input/output (C2C IO) mechanism. C2C IO refers to an interface or communication mechanism for direct data transmission between dies. Such type of IO design is used to provide efficient and reliable data exchange between integrated circuits (ICs) and is widely used in high-performance computing, network devices, storage systems, and various embedded systems.

The inventor has noticed that in the traditional interconnection communication structure, there are 4 link layer controllers between two dies, that is, it is necessary to allocate independent link resources to each protocol layer controller, thereby causes problems of hardware resource waste and system complexity, further increasing area and power consumption, and bringing difficulties to system design and maintenance.

At present, there have been many studies on high-speed interconnection between dies. Physical layer training is a key initialization step in a communication system, through processes such as channel estimation, clock synchronization, equalizer training, and power control, ensuring that a communication link between a transmitting end and a receiving end can be correctly established and operate efficiently. Furthermore, because reducing the time and power consumption of physical layer training can significantly improve transmission efficiency, this has become one of the key focuses in many high-speed interconnection studies.

Regarding the above research on the physical layer, the inventor has noticed that these methods generally need to perform training on the physical layer, thus increasing transmission time and consuming a certain amount of power.

In addition, some studies employ link layer technology to improve transmission efficiency. Although this method reduces the time and power consumption of physical layer training by working on the link layer to improve data transmission efficiency, it leads to slower data transmission speed, and causes data delay.

At least one embodiment of the present disclosure provides a data transmission controller including N protocol layer controllers, an arbitrator, and a data link layer controller; the N protocol layer controllers are configured to transmit N pieces of protocol layer data; the arbitrator is configured to receive the N pieces of protocol layer data from the N protocol layer controllers, and determine the transmission priority of the N pieces of protocol layer data; and the data link layer controller is configured to transmit the N pieces of protocol layer data according to the transmission priority, where N is an integer greater than or equal to 2.

At least one embodiment of the present disclosure further provides a data transmission method, an electronic device, and a computer storage medium corresponding to the data transmission controller.

The data transmission controller provided by at least one embodiment of the present disclosure, on the one hand, arbitrates different protocol layer data, reducing the number of data link layer controllers, and transmitting the different protocol layer data through a unique data link layer controller to realize multiplexing of the link layer, which can save the area and power consumption of die and improve the utilization rate and flexibility of data transmission links; on the other hand, through the design of data link layer encapsulation, isolation and protection of different protocol layer data are realized, ensuring the security and reliability of data transmission.

The embodiments of the present disclosure are described in detail below with reference to the drawings.

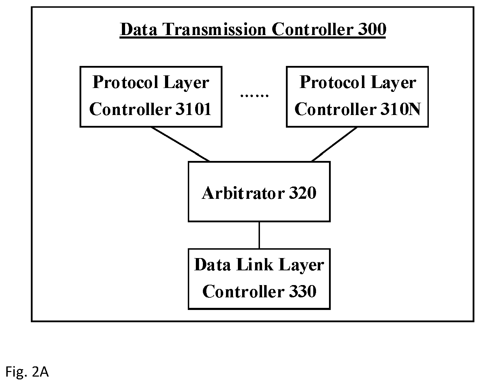

Fig. 2A shows a schematic block diagram of a data transmission controller provided by at least one embodiment of the present disclosure.

For example, as shown in Fig. 2A, the data transmission controller 300 includes N protocol layer controllers (for example, a protocol layer controller 3101, ..., a protocol layer controller 310n, ..., and a protocol layer controller 310N), an arbitrator 320, and a data link layer controller 330, where N is an integer greater than or equal to 2, and n is an integer greater than 0 and less than or equal to N.

For example, the N protocol layer controllers are configured to transmit N pieces of protocol layer data. For example, data corresponding to a protocol layer may be classified according to its role and content in data communication, for example, two categories including control information and user data may be included, and each type of protocol layer data has a specific purpose and data format to ensure the effectiveness and reliability of data communication. Of course, more or fewer categories may also be included, and the embodiments of the present disclosure are not limited thereto.

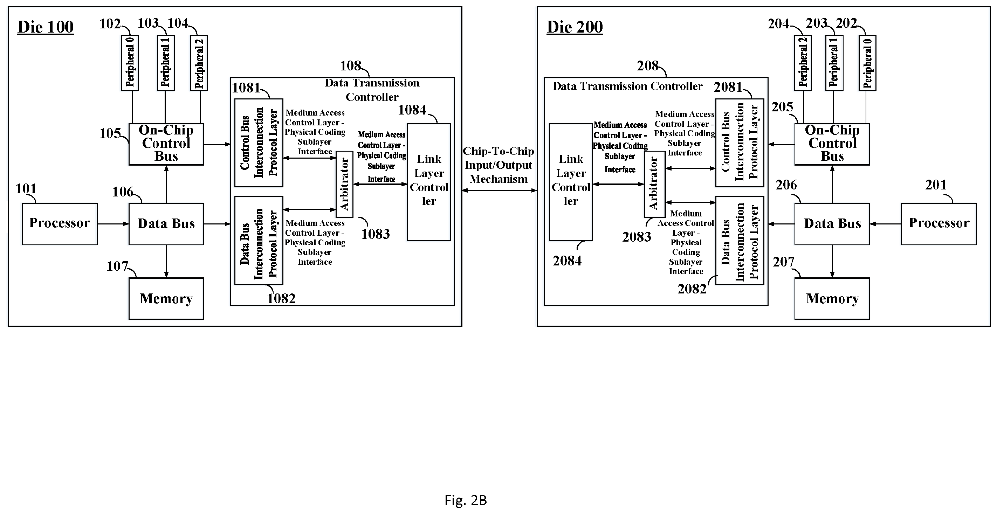

For example, the following description takes N = 2, that is, N protocol layer controllers include 2 protocol layer controllers 3101 and 3102 as an example, but more modules may also be included, which are not limited by the embodiments of the present disclosure. For example, the N protocol layer controllers may be any one of a NBIO controller, a SMN controller, or other types as shown in Fig. 1, which is not limited by the present disclosure. For example, combined with the usage scenario diagram shown in Fig. 2B, the following description takes current end as Die 100, opposite end as Die 200 (each die includes a data transmission controller 300, i.e., the data transmission controller 108/208 in Fig. 2B), a protocol layer controller 3101 as an SMN controller, and a protocol layer controller 3102 as an NBIO controller as an example, then the protocol layer data transmitted by the protocol layer controller 3101 is SMN data, and the protocol layer data transmitted by the protocol layer controller 3102 is NBIO data, which may be determined according to actual conditions, and the embodiments of the present disclosure are not limited thereto. For example, the arbitrator 320 is configured to receive N pieces of protocol layer data from the N protocol layer controllers, and determine the transmission priority of the N pieces of protocol layer data. For example, data from N protocol layers is sent to the arbitrator 320 together, and the arbitrator 320 receives the data from the above N protocol layer controllers, determines the transmission priority of the data, screens out the protocol layer data with the highest transmission priority, and sends it to the data link layer controller 330 for packaging and transmission. For example, the arbitrator 320 may be implemented as the arbitrator 1083/2083 shown in Fig. 2B, and the specific description may be found in the relevant description of Fig. 2B below, which will not be repeated here.

For example, the data link layer controller 310 is configured to transmit the N pieces of protocol layer data according to the transmission priority. For example, the data link layer controller 330 provides reliable data transmission services between adjacent nodes, and ensures that data frames between these nodes can be transmitted without errors. For example, the data link layer controller 330 realizes the above error-free data transmission by processing error detection and correction, flow control, and encapsulation and decapsulation of frames, and the specific transmission process may refer to relevant descriptions in the art, which will not be repeated here. For example, in some examples, the data link layer controller 330 may be implemented as the link layer controller 1084/2084 shown in Fig. 2B, and the specific description may be found in the relevant description of Fig. 2B below, which will not be repeated here.

Fig. 2B shows a schematic diagram of a usage scenario of a data transmission controller provided by at least one embodiment of the present disclosure.

As shown in Fig. 2B, in addition to the data transmission controller of the present disclosure, Die 100 and Die 200 each further include a processor, peripherals, an on-chip control bus, a data bus, and a memory. It should be noted that the die may include more components, and the components shown in Fig. 2B are only examples, which are not limited by the present disclosure. Specifically, Die 100 includes a processor 101, peripherals (0-2) 102-104, an on-chip control bus 105, a data bus 106, a memory 107, and a data transmission controller 108; and Die 200 includes a processor 201, peripherals (0-2) 202-204, an on-chip control bus 205, a data bus 206, a memory 207, and a data transmission controller 208. In the data transmission controller 108/208, compared with Fig. 1, Die 100 and Die 200 each add an arbitrator 1083/2083 and reduce one link layer controller. For example, taking Die 100 as an example, the control bus interconnection protocol layer 1081 receives protocol layer data transmitted from the on-chip control bus 105, and the data may be, for example, NBIO data. The on-chip control bus is an infrastructure for communication between different functional modules in a system on chip (SoC). The on-chip control bus allows various components to transmit control signals, status information, and a small amount of data, thereby realizing coordinated work and resource sharing. The data bus interconnection protocol layer 1082 receives protocol layer data transmitted from the data bus 106, and the data may be, for example, SMN data. The processor 101 sends all data to the data bus 106 for processing, and the data bus 106 includes control data sent to the on-chip control bus and high-speed user data for interaction. On the one hand, the data bus 106 sends control data to the on-chip control bus 105; on the other hand, if there is a storage request, data may also be sent to the memory 107 for storage. Data from the control bus interconnection protocol layer 1081 and the data bus interconnection protocol layer 1082 are transmitted to the arbitrator 1083 through the medium access control layer-physical coding sublayer interface for data arbitration. The arbitration selects data with higher transmission priority first, and then sends it to the data link layer controller 1084 through the medium access control layer-physical coding sublayer interface, and then transmits it to the data link layer controller 2084 at the opposite end through the chip-to-chip input/output mechanism. Compared with the two data transmission links in Fig. 1, there is only one data transmission link between Die 100 and Die 200, which saves link resources. The data link layer controller 2084 sends the received data to the arbitrator 2083 through the medium access control layer-physical coding sublayer interface for data screening, and the screened data are respectively transmitted to the opposite control bus interconnection protocol layer 2081 (for example, an SMN controller) and the data bus interconnection protocol layer 2082 (for example, an NBIO controller) through the medium access control layer-physical coding sublayer interface. In this way, the SMN controller and the NBIO controller in Die 100 and Die 200 can perform bidirectional data communication.

In the usage scenario shown in Fig. 2B, the data transmission controller provided by at least one embodiment of the present disclosure adds an arbitrator for the intermediate layer, resulting in different protocol layers being able to share the same physical link resources, greatly improving the utilization rate and flexibility of the link. Furthermore, reducing the number of data link layer controllers can avoid repeated supporting logic circuits such as repeated configuration and debugging, thereby reducing dynamic and static power consumption. Moreover, the arbitrator can dynamically and flexibly allocate, according to the actual bandwidth of the interface, the bandwidth of different protocol layer data, and support data isolation and protection, ensuring the security and reliability of data transmission.

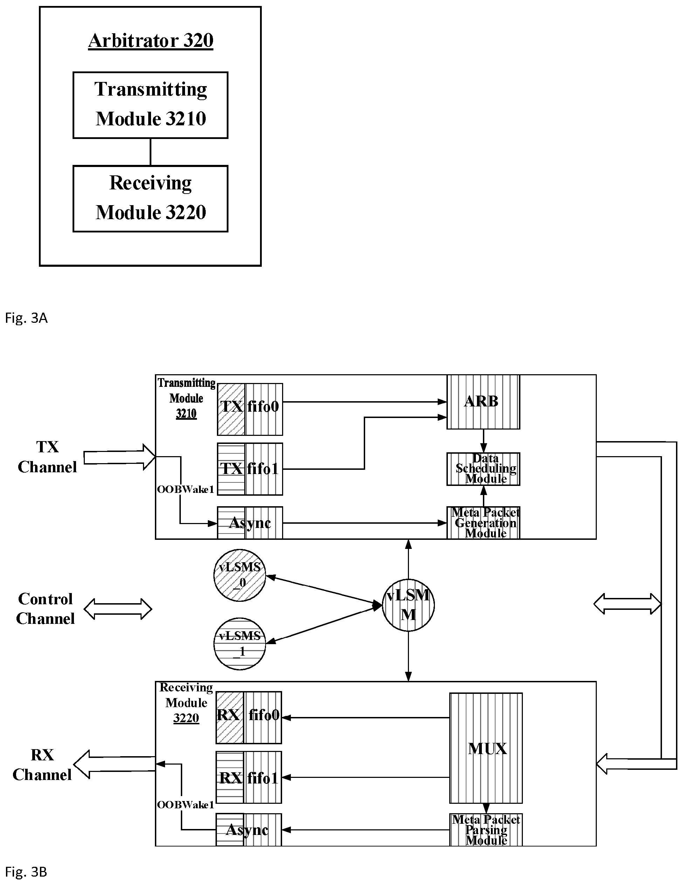

Fig. 3A shows a structural block diagram of an arbitrator in a data transmission controller provided by at least one embodiment of the present disclosure. As shown in Fig. 3A, the arbitrator 320 includes a transmitting module 3210 and a receiving module 3220.

For example, in a possible implementation, the transmitting module 3210 is configured to, after receiving N pieces of protocol layer data from N protocol layer controllers and determining the transmission priority of the N pieces of protocol layer data, transmit protocol layer data to be transmitted to the data link layer controller for data communication with the protocol layer at an opposite end. For example, the opposite end is a die communicating with the current end. For example, in the example shown in Fig. 3B, the current end is Die 100, and the opposite end may be, for example, Die 200.

For example, the transmitting module 3210 receives data (for example, NBIO data and SMN data) corresponding to two protocol layer controllers (for example, N = 2), determines the transmission priority of the two types of protocol layer data (for example, the transmission priority may be determined based on factors such as the size of data volume, clock cycle, frequency, etc.), and transmits the protocol layer data with the highest transmission priority (for example, either NBIO data or SMN data) to the data link layer controller for framing processing, packaging into data frames, and transmitting them one by one to the corresponding protocol layer controller of the opposite end, to establish a communication connection for mutual data transmission. For example, the framing processing includes adding data structures such as frame header, frame trailer, frame identifier, frame count, checksum, etc. The length of the data frame may be 512 bits, 1024 bits, etc. The specific scheme is determined based on actual design, and the present disclosure are not limited thereto.

For example, in a possible implementation, the receiving module 3220 is configured to receive protocol layer data transmitted by the opposite end, and transmit the protocol layer data transmitted by the opposite end to own protocol layer controller of the receiving module for data communication with the protocol layer controller at the opposite end.

For example, the receiving module 3220 receives data, transmitted by the transmitting module of the opposite end, from the NBIO protocol layer controller. Before the receiving module 3220 receives the NBIO data from the opposite end, the data link layer controller needs to perform unpacking processing on the received data frame from the opposite end, to obtain actual NBIO data (that is, may be understood as user data), and then transmit the data to the receiving module 3220. The receiving module 3220 transmits the received NBIO data to its own NBIO protocol layer controller, to establish a communication connection with the NBIO protocol layer controller at the opposite end, so that data corresponding to the protocol layer can be transmitted normally.

Fig. 3B shows an example of an arbitrator in a data transmission controller provided by at least one embodiment of the present disclosure.

As shown in Fig. 3B, the filling patterns in the box (including three types: "horizontal line", "vertical line", and "diagonal line") represent different clock domains. The arbitrator includes a TX (transmitting) channel, a control channel, and an RX (receiving) channel. The TX channel is connected to the transmitting module 3210, and the RX channel is connected to the receiving module 3220. For example, data from each protocol layer controller enters from the TX channel and flows out from the RX channel. The clocks of two different types of protocol layer data entering from the TX channel are converted by clock conversion modules fifo0 and fifo1, to be unified with the clock domain of the data link layer controller (i.e., the "vertical line" pattern). After clock conversion, the two types of protocol layer data are transmitted to a data arbitration unit ARB to determine the transmission priority. For example, it is determined that the protocol layer data converted by fifo1 has the highest transmission priority, thereby the data is transmitted to a data scheduling module for transmission. At this moment, the clock of a wake-up signal OBBwake1 from the protocol layer controller is converted to the clock of the data link layer controller by a clock conversion module Async, and then is transmitted to a Meta packet generation module to be packaged into a wake-up instruction. The data scheduling module, after receiving the wake-up instruction and data transmitted by the Meta packet generation module, preferentially transmits the wake-up instruction to the data link layer controller, to transmit it to a multi-channel data selection unit MUX at an opposite end. MUX transmits the wake-up instruction to a Meta packet parsing module, to unpack it into a wake-up signal OBBwake1. The Async conversion module at the opposite end restores the clock domain of the wake-up signal to the original clock domain of the protocol layer controller, and then transmits it to the corresponding protocol layer controller at the opposite end through the RX channel. In this way, the protocol layer controllers at both ends complete the handshake mechanism and establish data communication. At this moment, the data scheduling module transmits accumulated protocol layer data to MUX through the data transmission link, and MUX transmits the data to the fifo1 at the opposite end for clock restoration, and finally the data is successfully transmitted to the protocol layer controller at the opposite end to complete data transceiving. In addition, the control channel includes 3 virtual link state machines, which are vLSMS_0, vLSMS_1, and vLSMM respectively, where the vLSMS_0 and the vLSMS_1 represent interface states connected to two kind of protocol layer controllers in the TX channel, and vLSMM represents the interface state of the output port of the data scheduling module.

The data transmission controller provided by at least one embodiment of the present disclosure enables different protocol layer data to share the same physical link resources by adding an arbitrator, thereby greatly improving the utilization rate and flexibility of the link.

For example, in a possible implementation, the transmitting module 3210 includes a data clock conversion module configured to switch a first clock domain of the N pieces of protocol layer data to a second clock domain.

For example, the data clock conversion module (for example, fifo0 or fifo1 in Fig. 3B) receives data from 2/4/6 protocol layer controllers, and the first clock domain of data corresponding to each protocol layer controller is different, and the first clock domain is determined based on the characteristics of data transmission of each protocol layer controller (for example, based on frequency and phase). The data clock conversion module uniformly converts the clock domains corresponding to the above various protocol layer data to the second clock domain. For example, in a possible implementation, the second clock domain is the same as the clock domain of the data link layer controller 330 in Fig. 2A, thereby meeting the transmission requirements of the data link layer controller. It should be noted that data transmitted through the data link layer controller needs to meet the clock requirements of the data link layer controller, to ensure the accuracy and reliability of data transmission. If data is not properly synchronized when converting between clock domains, it may cause a flip-flop at the receiving end to enter an uncertain state, i.e., metastability. This situation may lead to system failures, thereby synchronous circuits (such as double flip-flop synchronizers) are usually used to reduce risks. For example, during cross-clock domain transmission, when the protocol layer data is converted, through the data clock conversion module, from the first clock domain to the clock domain of the data link layer controller (i.e., the second clock domain), a First-In-First-Out (FIFO) memory may further be used as an intermediate buffer to smooth data streams at different rates, thereby reducing the risk of metastability.

For example, in a possible implementation, the transmitting module 3210 further includes a control signal clock conversion module configured to switch a first clock domain of a control signal corresponding to the N pieces of protocol layer data to a second clock domain, where the control signal is used to control the communication connection between each protocol layer controller and the corresponding protocol layer controller at the opposite end.

For example, the control signal clock conversion module (for example, the Async in Fig. 3B) has the same function as the above data clock conversion module. For example, the first clock of the control signal corresponding to each protocol layer controller is converted to the clock domain of the data link layer controller (i.e., the second clock domain), which will not be repeated here. It should be noted that the control signal is used to control each protocol layer controller (for example, an NBIO controller) to be in communication connection with the corresponding NBIO controller at the opposite end. For example, the control signal may be a wake-up signal (OBBWake1) or other arbitrary control signals. The existence of the control signal realizes the handshake mechanism between the protocol layer controllers at both ends. For example, when the protocol layer controller at the opposite end (for example, an NBIO controller) receives a control signal (for example, a wake-up signal) transmitted by the NBIO controller at a transmitting end, it indicates that communication between the two ends has been established for data transceiving.

For example, in a possible implementation, the transmitting module 3210 further includes a data arbitration module configured to determine the transmission priority of the N pieces of protocol layer data and select protocol layer data to be transmitted.

For example, in a possible implementation, determining the transmission priority of the N pieces of protocol layer data and selecting protocol layer data to be transmitted includes: in response to that when selecting n-th protocol layer data among the N pieces of protocol layer data, unselected (n+1)-th protocol layer data is not empty and lasts for a certain period of time, determining a transmission priority of the (n+1)-th protocol layer data being higher than a transmission priority of the n-th protocol layer data, and selecting the (n+1)th protocol layer data as the protocol layer data to be transmitted; or in response to selected n-th protocol layer data among the N pieces of protocol layer data being empty, and unselected (n+1)-th protocol layer data being full, determining the transmission priority of the (n+1)-th protocol layer data being higher than the transmission priority of the n-th protocol layer data, and selecting the (n+1)th protocol layer data as the protocol layer data to be transmitted, where n is an integer greater than 0 and less than or equal to N.

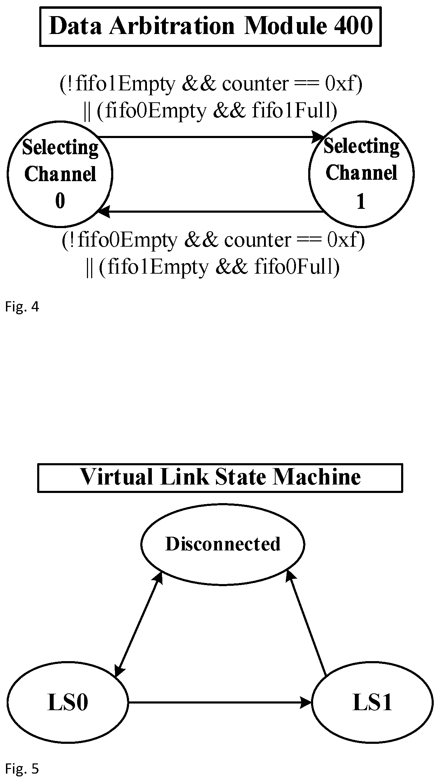

Fig. 4 shows a schematic diagram of arbitration logic of a data arbitration module in an arbitrator of a data transmission controller provided by at least one embodiment of the present disclosure.

As shown in Fig. 4, the data arbitration module 400 (i.e., ARB in Fig. 3B) arbitrates protocol layer data from channel 0 and channel 1. For example, the protocol layer data of channel 0 is from an NBIO controller, and the protocol layer data of channel 1 is from an SMN controller, where the types of protocol layer data of channel 0 and channel 1 are determined according to actual conditions, which are not limited by the present disclosure. For example, "!fifo1Empty && counter == 0xf" shown in Fig. 4 means that, the data arbitration module 400 currently selects protocol layer data from channel 0 (for example, data from an NBIO controller). If the protocol layer data from channel 1 (for example, from an SMN controller) is not empty and continuously transmitted to the data arbitration module 400 for multiple beats (for example, 16 beats) according to the clock cycle of the data link layer controller, to prevent excessive accumulation of data in the SMN controller, the transmission priority of the data from the SMN controller is higher than the transmission priority of the data from the NBIO controller, and the data arbitration module 400 selects the data from the SMN controller as the protocol layer data to be transmitted.

For example, "fifo0Empty && fifo1Full" shown in Fig. 4 means that if the protocol layer data from channel 0 selected by the data arbitration module 400 (for example, data from an NBIO controller) is empty, that is, there is no data in the NBIO controller to be transmitted, and the protocol layer data from channel 1 (for example, data from an SMN controller) is full, indicating that the data in the SMN controller can no longer be accumulated, and needs to be transmitted as soon as possible to receive subsequent data. At this moment, the transmission priority of the data from the SMN controller is higher than the transmission priority of the data from the NBIO controller, and the data arbitration module 400 selects the data from the SMN controller as the protocol layer data to be transmitted. It should be noted that if the data arbitration module 400 initially selects protocol layer data from channel 1, the algorithm logic for switching to selecting protocol layer data from channel 0 based on transmission priority is similar, which will not be repeated here.

The data arbitration module provided by at least one embodiment of the present disclosure receives multiple types of protocol layer data and shares one data link layer controller. Through an internal arbitration strategy, bandwidth is dynamically and flexibly allocated according to the actual bandwidth demand of the physical interface, and isolation and protection of different protocol layer data are supported, ensuring the security and reliability of data transmission.

For example, in a possible implementation, the transmitting module 3210 further includes a data scheduling module configured to receive the protocol layer data to be transmitted sent by the data arbitration module, and transmit it to the data link layer controller for transmitting to the opposite end.

For example, the data scheduling module (for example, the data scheduling module in Fig. 3B) receives data from an NBIO controller, and sends the data to the data link layer controller for transmitting to the opposite end. For example, in a possible implementation, as the data in the NBIO controller gradually decreases during transmission, and the data in the SMN controller gradually increases, the transmission priority of the data from the SMN controller will be higher than the transmission priority of the data from the NBIO controller. The data arbitration module will transmit the data from the SMN controller to the data scheduling module, and the data scheduling module dynamically allocates resources based on the received protocol layer data, to ensure maximum system utilization and reduce transmission delay.

For example, in a possible implementation, the transmitting module further includes a control instruction generation module configured to receive a control signal converted by the control signal clock conversion module, package the control signal into a first control instruction, and transmit the first control instruction to the data scheduling module.

For example, in a possible implementation, the data scheduling module is further configured to transmit the first control instruction to the data link layer controller for transmitting to the opposite end, to establish a communication connection with the corresponding protocol layer controller at the opposite end.

For example, as shown in Fig. 3B, the control instruction generation module includes a Meta packet generation module. Because the transmission condition of all data transmitted through the data link layer controller is to meet the relevant data frame format, the Meta packet generation module packages a control signal (for example, a wake-up signal OOBwake1) transmitted by a protocol layer (for example, an NBIO controller) into a first control instruction (for example, a wake-up instruction), and sends first control instruction to the data scheduling module for transmission. Specifically, the Meta packet packages the wake-up signal into a data frame format required by the data link layer controller to form a wake-up instruction, for example, adding a frame header, a frame trailer, a frame count, a checksum, etc., on the basis of the control signal.

For example, the data scheduling module sends the received wake-up instruction to the data link layer controller for transmitting to the NBIO controller at the opposite end for communication connection, that is, to establish a handshake mechanism, and at this moment, both ends may perform data transceiving.

For example, in a possible implementation, the receiving module 3220 includes: a multi-channel data selection module, configured to receive protocol layer data and a first control instruction transmitted by the opposite end; a data clock restoration module, configured to restore the second clock domain of the protocol layer data transmitted by the opposite end to the first clock domain, and transmit the protocol layer data to the corresponding protocol layer; and a control signal clock restoration module, configured to restore the second clock domain of the control signal transmitted by the opposite end to the first clock domain, and transmit the control signal to the corresponding protocol layer.

For example, the multi-channel data selection module (for example, MUX in Fig. 3B) includes one input port and a plurality of output ports. The input port receives data transmitted by the NBIO controller and SMN controller at the opposite end and a control instruction transmitted by any kind of protocol layer controller (for example, a wake-up instruction OOBwake1 transmitted by an NBIO controller), protocol layer data of the same type is filtered based on a data judgment algorithm, and is transmitted to the corresponding protocol layer controller through the plurality of output ports.

For example, the data clock restoration module (for example, Async in Fig. 3B) restores the second clock domain (i.e., the clock domain of the data link layer) of the data from the NBIO controller and SMN controller at the opposite end output by the plurality of ports of the multi-channel data selection module to the first clock domain (i.e., the clock domain of the opposite end not converted by the data clock conversion module) respectively, and then transmits the data to the corresponding NBIO controller and SMN controller. It should be noted that the clock domains of data in the protocol layer controllers at both ends need to be consistent to perform data parsing for normal communication connection. It should also be noted that fifo0 and fifo1 in the transmitting module 3210 and the receiving module 3220 in Fig. 3B are the same. For the control signal restoration module, its execution logic is similar to that of the data clock restoration module, and Async in the transmitting module 3210 and the receiving module 3220 in Fig. 3B is also the same, which will not be repeated here.

For example, in a possible implementation, the receiving module further includes a control instruction parsing module configured to unpack the first control instruction into a control signal and transmit the control signal to the control signal clock restoration module. The multi-channel data selection module is further configured to transmit the received protocol layer data transmitted by the opposite end to the data clock restoration module, and transmit the first control instruction to the control instruction parsing module, where the transmission priority of the first control instruction is higher than the transmission priority of the protocol layer data.

For example, as shown in Fig. 3B, the control instruction parsing module includes a Meta packet parsing module. The Meta packet parsing module receives the first control instruction (for example, a wake-up instruction transmitted by the NBIO controller at the opposite end) transmitted by the multi-channel data selection module, unpacks and parses he first control instruction to extract an intermediate control signal (for example, a wake-up signal OBBwake1), and sends the intermediate control signal to the control signal clock restoration module for clock domain restoration.

For example, in a possible implementation, the transmission priority of the first control instruction being higher than the transmission priority of the protocol layer data includes:
in response to receiving the first control instruction transmitted by the protocol layer controller to be transmitted at the opposite end, transmitting the data of the protocol layer controller to be transmitted.

For example, after the multi-channel data selection module receives the data of the protocol layer (for example, an NBIO controller) at the opposite end and the first control instruction (for example, a wake-up instruction) transmitted by the NBIO controller, because the NBIO controllers at both ends are in an unconnected state at this moment, the multi-channel data selection module needs to preferentially transmit the wake-up instruction of the NBIO controller at the opposite end to establish a communication connection with the NBIO controller at the opposite end, that is, to establish a handshake mechanism. It should be noted that the wake-up instruction may be understood as one kind of handshake signals. Based on actual design, the present disclosure does not limit any other handshake signals with communication connection establishment functions.

For example, in a possible implementation, the arbitrator 320 further includes a virtual link state machine determination module configured to, in response to at least one of the interface states that receive N pieces of protocol layer data being in a working state, set the interface state of the data scheduling module to the working state in advance.

For example, the arbitrator includes N input ports connected to protocol layer controllers and one output port (for example, the output port of the data scheduling module), where each input port is connected to one type of protocol layer controller. When any one of the N protocol layer controllers (for example, two, an NBIO controller and an SMN controller) has data accumulated to a certain extent and needs to be transmitted (i.e., reaching the working state), the output port of the data scheduling module needs to be set to the working state in advance to ensure the immediacy of data transmission, and avoid excessive accumulation of data in the protocol layer controller causing excessive cache pressure. For example, as shown in Fig. 3B, the virtual link state machine determination module (not shown in the figure) includes three virtual link state machines: vLSMS_0, vLSMS_1, and vLSMM. vLSMS_0 and vLSMS_1 are virtual link state machines of two ports connected to protocol layer controllers, and vLSMM is a virtual link state machine of the output port of the transmitting module 3210 (i.e., the output port of the data scheduling module).

For example, in a possible implementation, any one of the virtual link state machines includes any one of a silent state, a working state, and a low-power state.

Fig. 5 shows a schematic working diagram of a virtual link state machine of an arbitrator in a data transmission controller provided by at least one embodiment of the present disclosure.

As shown in Fig. 5, for example, the virtual link state machine (vLSM) includes three interface states: Disconnected, LS0, and LS1, where the Disconnected is a silent state, LS0 is a working state, and LS1 is a low-power state. It should be noted that each input port and output port of the arbitrator includes a virtual link state machine, and each virtual link state machine includes any one of the above three interface states. For any port, the jump situations of its virtual link state machine are divided into the following four cases:
(1) Jump from Disconnected state to LS0 state;
(2) Jump from LS0 state to Disconnected state;
(3) Jump from LS0 state to LS1 state; and
(4) Jump from LS1 state to Disconnected state.

It should be noted that the interface state of any port cannot jump from LS1 state (i.e., low-power state) to LS0 state (i.e., working state) or from Disconnected state (i.e., silent state) to LS1 state (i.e., low-power state). LS1 state is an intermediate state, and the jump from LS0 state to LS1 state is only possible when the data to be transmitted in the protocol layer gradually decreases and thus the transmission rate decreases.

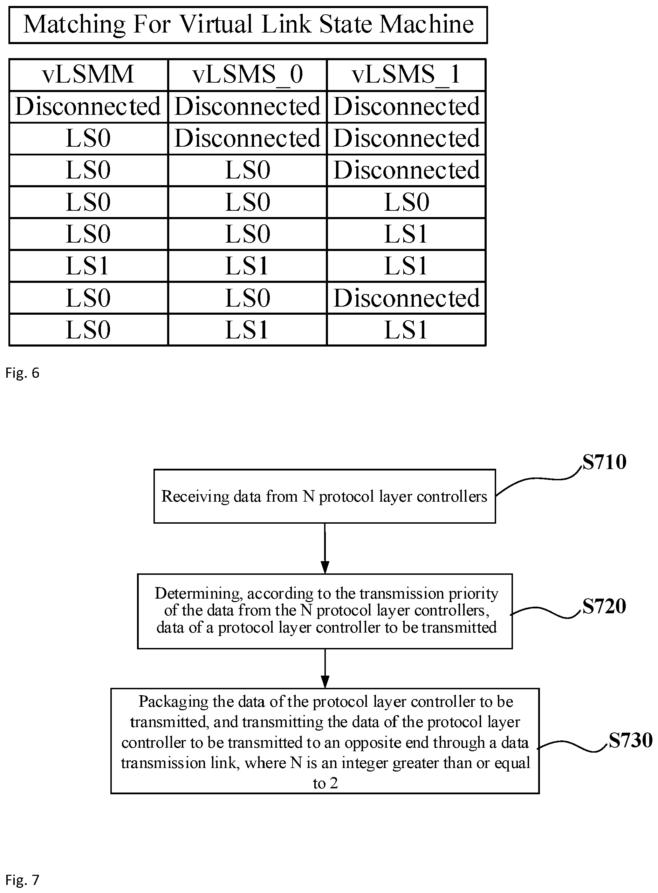

Fig. 6 shows a schematic diagram of matching between virtual link state machines of each port of an arbitrator in a data transmission controller provided by at least one embodiment of the present disclosure.

As shown in Fig. 6, for example, the arbitrator includes two input ports and one output port, and the virtual link state machines of the two input ports are vLSMS_0 and vLSMS_1 shown in the figure, and the virtual link state machine of the output port is vLSMM shown in the figure. For example, the matching between the virtual link state machines of the three ports includes the following 8 cases:
(1) vLSMS_0 is in Disconnected state, vLSMS_1 is in Disconnected state, and thus vLSMM is in Disconnected state;
(2) vLSMS_0 is in Disconnected state, vLSMS_1 is in Disconnected state, and thus vLSMM is in LS0 state (i.e., working state);
(3) vLSMS_0 is in LS0 state (i.e., working state), vLSMS_1 is in Disconnected state, and thus vLSMM is in LS0 state (i.e., working state);
(4) vLSMS_0 is in LS0 state (i.e., working state), vLSMS_1 is in LS0 state (i.e., working state), and thus vLSMM is in LS0 state (i.e., working state);
(5) vLSMS_0 is in LS0 state (i.e., working state), vLSMS_1 is in LS1 state (i.e., low-power state), and thus vLSMM is in LS0 state (i.e., working state);
(6) vLSMS_0 is in LS1 state (i.e., low-power state), vLSMS_1 is in LS1 state (i.e., low-power state), and thus vLSMM is in LS1 state (i.e., low-power state);
(7) vLSMS_0 is in LS0 state (i.e., working state), vLSMS_1 is in Disconnected state, and thus vLSMM is in LS0 state (i.e., working state);
(8) vLSMS_0 is in LS1 state (i.e., low-power state), vLSMS_1 is in LS1 state (i.e., low-power state), and thus vLSMM is in LS0 state (i.e., working state).

It should be noted that the input port of the arbitrator is connected to the protocol layer controller at the upstream. When stopping the transmission of protocol layer data, the data transmission in the upstream protocol layer controller should be stopped first, and then the data transmission in the downstream output port should be stopped. Thus, for the above case (2), there is a case where the input ports are all in Disconnected state, but the output port is working. It should be noted that the output port being working only lasts for a short time and then becomes Disconnected. Case (8) is similar to case (2), which will not be repeated here.

It should be noted that in the embodiments of the present disclosure, the data transmission controller may include more or fewer circuits or units, and the connection relationship between each circuit or unit is not limited and may be determined according to actual requirements. The specific composition mode of each circuit is not limited, and it may be composed of analog components according to circuit principles, or composed of digital chips, or composed in other applicable ways.

The data transmission controller provided by at least one embodiment of the present disclosure, on the one hand, arbitrates different protocol layer data, reducing the number of data link layer controllers, and transmits the different protocol layer data through a unique data link layer controller to realize multiplexing of the data link layer, reducing the use of hardware resources, which may save area and power consumption, and improve the utilization rate and flexibility of data transmission links; on the other hand, through the design of data link layer encapsulation, isolation and protection of the different protocol layer data are realized, ensuring the security and reliability of data transmission.

At least one embodiment of the present disclosure further provides a data transmission method including: receiving data from N protocol layers; determining data to be transmitted according to the transmission priority of the data from the N protocol layers; and packaging the data of the protocol layer to be transmitted and transmitting the data of the protocol layer to be transmitted to an opposite end through a data transmission link, where N is an integer greater than or equal to 2.

Fig. 7 shows a schematic flowchart of a data transmission method provided by at least one embodiment of the present disclosure. As shown in Fig. 7, the data transmission method includes steps S710 to S730.

Step S710: receiving data from N protocol layer controllers.

Step S720: determining, according to the transmission priority of the data from the N protocol layer controllers, data of a protocol layer controller to be transmitted.

Step S730: packaging the data of the protocol layer controller to be transmitted, and transmitting the data of the protocol layer controller to be transmitted to an opposite end through a data transmission link, where N is an integer greater than or equal to 2.

For example, the above data transmission method corresponds to the data transmission controller as shown in Fig. 2.

For example, the data from the N protocol layer controllers in step S710 is transmitted by the N protocol layers 3101-310N in Fig. 2A, and the transmitting module 3210 in Fig. 3A receives the data from the N protocol layer controllers.

For example, in a possible implementation, after receiving data from N protocol layer controllers, the data transmission method further includes converting the clock domain of the data from the N protocol layer controllers to the clock domain of the data transmission link for arbitration. For example, this step may be executed by the above data clock conversion module (for example, fifo0 or fifo1 in the transmitting module 3210 in Fig. 3B), and the specific function of data clock conversion has been described above, and will not be repeated here.

For example, in a possible implementation, the data transmission method further includes: receiving a control signal corresponding to the data of the protocol layer controller to be transmitted, converting the clock domain of the control signal to the clock domain of the data transmission link, packaging the control signal into a control instruction, and transmitting the control instruction to the opposite end through the data transmission link to be in communication connection with the protocol layer controller of the opposite end, where the transmission priority of the control instruction is higher than the transmission priority of the data of the protocol layer controller to be transmitted. For example, this step may be executed by the above control signal clock conversion module and control instruction generation module.

For example, when data from an NBIO controller is to be transmitted through a data transmission link, a control signal (for example, a wake-up signal OBBwake1) transmitted by the NBIO controller is unified with the clock of the data transmission link after passing through a control signal clock conversion module (for example, Async in the transmitting module 3210 of Fig. 3B). The wake-up signal is packaged into a control instruction through a control instruction generation module (for example, a Meta packet generation module in the transmitting module 3210 in Fig. 3B) and transmitted to the NBIO controller at the opposite end through the data transmission link, enables the NBIO controllers at both ends establishing a communication connection. It should be noted that data may be transceived only after the NBIO controllers at both ends establish a communication connection, that is, the transmission priority of the control instruction in the protocol layer controller is higher than the transmission priority of the data.

For example, in a possible implementation, determining, according to the transmission priority of the data from the N protocol layer controllers, the data of the protocol layer controller to be transmitted includes: in response to that when selecting n-th protocol layer data among the N pieces of protocol layer data, unselected (n+1)-th protocol layer data is not empty and lasts for a certain period of time, determining the transmission priority of the (n+1)-th protocol layer data being higher than the transmission priority of the n-th protocol layer data, and selecting the (n+1)th protocol layer data as the protocol layer data to be transmitted;

or in response to selected n-th protocol layer data among the N pieces of protocol layer data being empty, and unselected (n+1)-th protocol layer data being full, determining the transmission priority of the (n+1)-th protocol layer data being higher than the transmission priority of the n-th protocol layer data, and selecting the (n+1)th protocol layer data as the protocol layer data to be transmitted, where n is an integer greater than 0 and less than or equal to N. For example, this step may be executed by the above data arbitration module.

For example, if the data transmission link is transmitting data from an NBIO controller, and data from an SMN controller accumulates continuously within a plurality of clock cycles (for example, 16/32 beats, where one beat is one clock cycle), at this moment, to prevent excessive accumulation of data in the SMN controller, it is determined that the transmission priority of the data in the SMN controller is higher than the transmission priority of the data in the NBIO controller. Thus, the data selected by data arbitration is from the SMN controller, and is transmitted to the SMN controller at the opposite end for data communication. It should be noted that because part of the data in the NBIO controller has been transmitted, it has remaining space to receive subsequent data for transmission during the transmission of data from the SMN controller. At least one embodiment of the present disclosure flexibly allocates bandwidth through an internal arbitration strategy, dynamically and flexibly allocates bandwidth according to the actual bandwidth requirement of the physical interface, and realizes isolation and protection of different protocol layer data, ensuring the security and reliability of data transmission.

For example, in a possible implementation, the data transmission method further includes: in response to at least one of the virtual link state machines that receive N pieces of protocol layer data being in a working state, setting the virtual link state machine connected to the data transmission link to the working state in advance. For example, the virtual link state machine includes any one of a silent state, a working state, and a low-power state. For example, this step may be executed by the above virtual link state machine determination module.

It should be noted that the low-power state is an intermediate state of the working state, and also belongs to one type of working state. For example, the state of each interface is judged through the virtual link state machine, where the function and execution logic of the virtual link state machine have been described above, and will not be repeated here.

The data transmission method provided by at least one embodiment of the present disclosure, on the one hand, arbitrates different protocol layer data, reducing the number of data link layer controllers, and transmits the different protocol layer data through a unique data link layer controller to realize multiplexing of the data link layer, which may reduce the use of hardware resources, and achieve the effect of saving area and power consumption; on the other hand, flexibly allocates bandwidth through an internal arbitration strategy, dynamically and flexibly allocates bandwidth of data of each protocol layer according to the actual bandwidth demand of the physical interface, and realizes isolation and protection of data of different protocol layers, ensuring the security and reliability of data transmission.

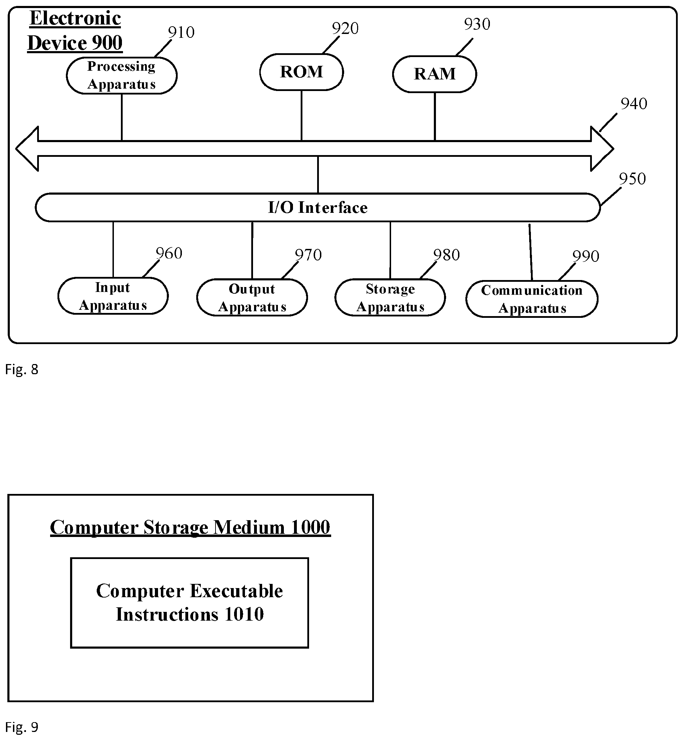

At least one embodiment of the present disclosure further provides an electronic device, and the electronic device includes the data transmission controller of any one of the above embodiments. Fig. 8 is a schematic block diagram of the electronic device provided by at least one embodiment of the present disclosure. For example, as shown in Fig. 8, the electronic device includes: a processing apparatus 910; a storage apparatus 980, including one or more computer program modules, where the one or more computer program modules are stored in the storage apparatus 980 and configured to be executed by the processing apparatus 910, and the one or more computer program modules are used to execute the data transmission method provided by any one of the embodiments of the present disclosure.

For example, the processing apparatus 910 may be a central processing unit (CPU), a digital signal processor (DSP), a graphics processing unit (GPU), a general-purpose graphics processing unit (GPGPU), or other forms of processing units with data processing capabilities and/or instruction execution capabilities, which may be a general-purpose processor or a special-purpose processor, and may control other components in the electronic device to perform desired functions.

For example, the storage apparatus 980 may include one or more computer program products, the computer program products may include various forms of computer-readable storage media, such as volatile memory and/or non-volatile memory. The volatile memory may include, for example, random access memory (RAM) and/or cache memory. The non-volatile memory may include, for example, read-only memory (ROM), a hard disk, flash memory, etc. One or more computer program instructions may be stored on the computer-readable storage medium, and the processing apparatus may run the program instructions to implement the functions (implemented by the processing apparatus) in the embodiments of the present disclosure and/or other desired functions, such as the data transmission method. Various application programs and various data, such as a first release information packet, a second total release information packet, a second release information sub-packet, and various data used and/or generated by the application programs, may also be stored in the computer-readable storage medium.

For example, the electronic device in the embodiments of the present disclosure may include, but not limited to, mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device 900 shown in Fig. 8 is merely an example, and should not pose any limitation to the functions and the range of use of the embodiments of the present disclosure.

For example, as shown in Fig. 8, in some examples, the processing apparatus 910 may include the processor of any one of the above embodiments, which may perform various suitable actions and processing according to a program stored in a read-only memory (ROM) 920 or a program loaded from a storage apparatus 980 into a random-access memory (RAM) 930. The RAM 930 further stores various programs and data required for operations of the computer operation system. The processing apparatus 910, the ROM 920, and the RAM 930 are interconnected by means of the bus 940. An input/output (I/O) interface 950 is also connected to the bus 940.

For example, the following components may be connected to the I/O interface 950: an input apparatus 960 including, for example, a touch screen, a touch pad, a keyboard, a mouse, a camera, a microphone, an accelerometer, a gyroscope, etc.; an output apparatus 970 including, for example, a liquid crystal display (LCD), a loudspeaker, a vibrator, etc.; a storage apparatus 980 including, for example, a magnetic tape, a hard disk, etc.; and a communication apparatus 990 which may include, for example, a network interface card such as a LAN card, a modem, etc. The communication apparatus 990 may allow the electronic device 900 to perform wireless or wired communication with other devices to exchange data, and perform communication processing via a network such as the Internet. Although Fig. 8 shows an electronic device 900 including various apparatuses, it should be understood that it is not required to implement or include all the shown apparatuses. It may alternatively be implemented or include more or fewer apparatuses.

For example, the electronic device 900 may further include a peripheral interface (not shown in the figure), etc. The peripheral interface may be interfaces of various types, for example, a USB interface, a lighting interface, etc. The communication apparatus 990 may communicate with a network and other devices through wireless communication; the network is, for example, the Internet, an intranet and/or a wireless network such as a cellular telephone network, a wireless local area network (LAN) and/or a metropolitan area network (MAN). Wireless communication may employ any one of a variety of communication standards, protocols and technologies, including but not limited to global system for mobile communication (GSM), enhanced data GSM environment (EDGE), wideband code division multiple access (W-CDMA), code division multiple access (CDMA), time division multiple access (TDMA), Bluetooth, Wi-Fi (e.g., based on IEEE 802. 11a, IEEE 802. 11b, IEEE 802. 11g and/or IEEE 802. 11n standards), voice over Internet protocol (VoIP), Wi-MAX, protocols for e-mail, instant messaging and/or short message service (SMS), or any other suitable communication protocol.

For example, the electronic device 900 may be any device such as a mobile phone, a tablet computer, a notebook computer, an e-book, a game console, a television, a digital photo frame, a navigator, a server, etc., or any combination of data processing apparatuses and hardware, which is not limited by the embodiments of the present disclosure.

At least one embodiment of the present disclosure further provides a computer storage medium for storing non-transitory computer program executable codes (for example, computer executable instructions). The non-transitory computer program executable codes can implement the data transmission method of any one of the embodiments of the present disclosure when executed by a computer (including one or more processors).

Fig. 9 shows a schematic diagram of a computer storage medium provided by at least one embodiment of the present disclosure. As shown in Fig. 9, the computer storage medium 1000 non-transitorily stores computer executable instructions 1010. For example, when the computer executable instructions 1010 are executed by a computer (including one or more processors), the data transmission method provided by any one of the embodiments of the present disclosure may be executed.

For example, the storage medium may be any combination of one or more computer-readable storage media. For example, one computer-readable storage medium contains computer-readable program codes for receiving data from N protocol layers, another computer-readable storage medium contains computer-readable program codes for determining data of a protocol layer to be transmitted according to the transmission priority of the data from the N protocol layers, and another computer-readable storage medium contains computer-readable program codes for packaging the data of the protocol layer to be transmitted and transmitting it to the opposite end through a data transmission link. For example, when the program codes are read by a computer, the computer can execute the program codes stored in the computer storage medium, and execute, for example, the data transmission method provided by any one of the embodiments of the present disclosure.

For example, the storage medium may include a memory card of a smart phone, a storage component of a tablet computer, a hard disk of a personal computer, random access memory (RAM), read-only memory (ROM), erasable programmable read-only memory (EPROM), portable compact disc read-only memory (CD-ROM), flash memory, or any combination of the above storage media, or other applicable storage media.

For example, the computer storage medium 1000 may be applied to the above data transmission controller. For another example, the computer storage medium 1000 may be the read-only memory 920 in the electronic device 900 shown in Fig. 8. For example, the relevant description of the computer storage medium 1000 may refer to the corresponding description of the read-only memory 920 in the electronic device 900 shown in Fig. 8, which will not be repeated here.

Although the present disclosure has been described in detail above with general explanations and specific implementations, it will be obvious to those skilled in the art that some modifications or improvements can be made on the basis of the embodiments of the present disclosure. Therefore, such modifications or improvements made without departing from the spirit of the present disclosure shall all fall within the protection scope claimed by the present disclosure.

For the present disclosure, in addition to the aforementioned exemplary descriptions, the following statements should be noted:
(1) The drawings involve only the structure(s) in connection with the embodiment(s) of the present disclosure, and other structure(s) can be referred to common design(s).
(2) For clarity, in the drawings used to describe the embodiments of the present disclosure, the thicknesses of layers or regions are enlarged or reduced, that is, the drawings are not drawn to actual scale.
(3) In case of no conflict, features in one embodiment or in different embodiments can be combined to obtain new embodiments.

What have been described above are only exemplary embodiments of the present disclosure, and are not intended to limit the protection scope of the present disclosure, and the protection scope of the present disclosure is determined by the appended claims.

## Claims

1. A data transmission controller, comprising N protocol layer controllers, an arbitrator, and a data link layer controller,
wherein the N protocol layer controllers are configured to transmit N pieces of protocol layer data; the arbitrator is configured to receive the N pieces of protocol layer data from the N protocol layer controllers, and determine a transmission priority of the N pieces of protocol layer data; and
the data link layer controller is configured to transmit the N pieces of protocol layer data according to the transmission priority,
wherein N is an integer greater than or equal to 2.

2. The data transmission controller according to claim 1, wherein the arbitrator comprises:
a transmitting module, configured to, after receiving the N pieces of protocol layer data from the N protocol layer controllers and determining the transmission priority of the N pieces of protocol layer data, transmit protocol layer data to be transmitted to the data link layer controller for data communication with a protocol layer at an opposite end; and
a receiving module, configured to receive protocol layer data transmitted by the opposite end, and transmit the protocol layer data transmitted by the opposite end to own protocol layer of the receiving module for data communication with the protocol layer at the opposite end.

3. The data transmission controller according to claim 2, wherein the transmitting module comprises:
a data clock conversion module, configured to switch a first clock domain of the N pieces of protocol layer data to a second clock domain; and
a control signal clock conversion module, configured to switch a first clock domain of a control signal corresponding to the N pieces of protocol layer data to a second clock domain, wherein the control signal is used to control a communication connection between each protocol layer and a corresponding protocol layer at the opposite end, and the second clock domain is the same as a clock domain of the data link layer controller.

4. The data transmission controller according to claim 3, wherein the transmitting module further comprises:
a data arbitration module, configured to determine the transmission priority of the N pieces of protocol layer data and select protocol layer data to be transmitted; and
a data scheduling module, configured to receive the protocol layer data to be transmitted sent by the data arbitration module, and transmit the protocol layer data to be transmitted sent by the data arbitration module to the data link layer controller for transmitting to the opposite end.

5. The data transmission controller according to claim 4, wherein the transmitting module further comprises:
a control instruction generation module, configured to receive a control signal converted by the control signal clock conversion module, package the control signal into a first control instruction, and transmit the first control instruction to the data scheduling module;
and the data scheduling module is further configured to transmit the first control instruction to the data link layer controller for transmitting to the opposite end, to establish a communication connection with the corresponding protocol layer at the opposite end.

6. The data transmission controller according to claim 4 or 5, wherein the receiving module comprises:
a multi-channel data selection module, configured to receive the protocol layer data transmitted by the opposite end and a first control instruction transmitted by the opposite end;
a data clock restoration module, configured to restore a second clock domain of the protocol layer data transmitted by the opposite end to the first clock domain; and
a control signal clock restoration module, configured to restore a second clock domain of a control signal transmitted by the opposite end to the first clock domain, and transmit the control signal to the corresponding protocol layer.

7. The data transmission controller according to claim 6, wherein the receiving module further comprises:
a control instruction parsing module, configured to unpack the first control instruction into a control signal and transmit the control signal to the control signal clock restoration module;
and the multi-channel data selection module is further configured to transmit the received protocol layer data transmitted by the opposite end to the data clock restoration module, and transmit the first control instruction to the control instruction parsing module, wherein a transmission priority of the first control instruction is higher than a transmission priority of the protocol layer data.

8. The data transmission controller according to claim 7, wherein the transmission priority of the first control instruction being higher than the transmission priority of the protocol layer data comprises:
in response to receiving a first control instruction transmitted by a protocol layer to be transmitted at the opposite end, transmitting data of the protocol layer to be transmitted.

9. The data transmission controller according to any one of claims 4-8, wherein determining the transmission priority of the N pieces of protocol layer data and selecting the protocol layer data to be transmitted comprises:
in response to that when selecting n-th protocol layer data among the N pieces of protocol layer data, unselected (n+1)-th protocol layer data is not empty and lasts for a certain period of time, determining a transmission priority of the (n+1)-th protocol layer data being higher than a transmission priority of the n-th protocol layer data, and selecting the (n+1)th protocol layer data as the protocol layer data to be transmitted; or
in response to selected n-th protocol layer data among the N pieces of protocol layer data being empty, and unselected (n+1)-th protocol layer data being full, determining the transmission priority of the (n+1)-th protocol layer data being higher than the transmission priority of the n-th protocol layer data, and selecting the (n+1)th protocol layer data as the protocol layer data to be transmitted,
wherein n is an integer greater than 0 and less than or equal to N.

10. The data transmission controller according to any one of claims 4-9, wherein the arbitrator further comprises:
a virtual link state machine determination module, configured to, in response to at least one of virtual link state machines that receive the N pieces of protocol layer data being in a working state, set a virtual link state machine of the data scheduling module to the working state in advance.

11. The data transmission controller according to claim 10, wherein the virtual link state machine comprises any one of a silent state, a working state, and a low-power state.

12. A data transmission method, comprising:
receiving data from N protocol layer controllers;
determining, according to a transmission priority of the data from the N protocol layer controllers, data of a protocol layer controller to be transmitted; and
packaging the data of the protocol layer controller to be transmitted, and transmitting the data of the protocol layer controller to be transmitted to an opposite end through a data transmission link,
wherein N is an integer greater than or equal to 2.

13. The data transmission method according to claim 12, wherein after the receiving the data from the N protocol layer controllers, the data transmission method further comprises:
converting a clock domain of the data from the N protocol layer controllers to a clock domain of a data transmission link controller for arbitration.

14. The data transmission method according to claim 13, further comprising:
receiving a control signal corresponding to the data of the protocol layer controller to be transmitted, converting a clock domain of the control signal to a clock domain of the data transmission link, packaging the control signal into a control instruction, and transmitting the control instruction to the opposite end through the data transmission link to be in communication connection with a protocol layer controller of the opposite end, wherein a transmission priority of the control instruction is higher than a transmission priority of the data of the protocol layer controller to be transmitted.

15. The data transmission method according to any one of claims 12-14, wherein the determining, according to the transmission priority of the data from the N protocol layer controllers, the data of the protocol layer to be transmitted comprises:
in response to that when selecting n-th protocol layer data among the N pieces of protocol layer data, unselected (n+1)-th protocol layer data is not empty and lasts for a certain period of time, determining a transmission priority of the (n+1)-th protocol layer data being higher than a transmission priority of the n-th protocol layer data, and selecting the (n+1)th protocol layer data as the protocol layer data to be transmitted; or
in response to selected n-th protocol layer data among the N pieces of protocol layer data being empty, and unselected (n+1)-th protocol layer data being full, determining the transmission priority of the (n+1)-th protocol layer data being higher than the transmission priority of the n-th protocol layer data, and selecting the (n+1)th protocol layer data as the protocol layer data to be transmitted,
wherein n is an integer greater than 0 and less than or equal to N.

16. The data transmission method according to any one of claims 12-15, further comprising:
in response to at least one of virtual link state machines that receive N pieces of protocol layer data being in a working state, setting a virtual link state machine connected to the data transmission link to the working state in advance.

17. The data transmission method according to claim 16, wherein the virtual link state machine comprises any one of a silent state, a working state, and a low-power state.

18. An electronic device, comprising:
a storage apparatus, configured to non-transitorily store computer-executable instructions; and
a processing apparatus, configured to execute the computer-executable instructions,
wherein the computer-executable instructions, when executed by the processing apparatus, execute the data transmission method according to any one of claims 12-17.

19. A non-transitory storage medium, non-transitorily storing computer-executable instructions, wherein the computer-executable instructions, when executed by a computer, execute the data transmission method according to any one of claims 12 to 17.
